# EUROPÄISCHE PATENTANMELDUNG

(11) **EP 2 743 555 A1**
(43) Veröffentlichungstag der Anmeldung: **18.06.2014**
(21) Anmeldenummer: 12196776.4
(22) Anmeldetag: 12.12.2012
(51) Int. Cl.: F16K 39/02, F16K 31/06

(54) **Mehrstufiges Ventil**

(71) Anmelder: Magna Steyr Fahrzeugtechnik AG & Co KG, 8041 Graz (AT)
(72) Erfinder: Seifert, Jürgen, 8045 Graz (AT)
(74) Vertreter: Rausch, Gabriele

(57) **Zusammenfassung**

Mehrstufiges Ventil für ein Druckspeichersystem, wobei das mehrstufige Ventil ein Ventilgehäuse (45), eine Ventilkammer mit einer Zulauföffnung (10) und einer Auslassöffnung (11), einen entlang einer bevorzugten Achse (17) bewegbaren Ventilkolben (40), sowie einen ersten Ventilkörper (20) und einen zweiten Ventilkörper (30) umfasst, wobei der erste Ventilkörper (20) und der zweite Ventilkörper (30) an der bevorzugten Achse (17) koaxial angeordnet sind, und wobei der erste Ventilkörper (20) den Ventilkolben (40) zumindest teilweise umschließt und durch zumindest zwei in den ersten Ventilkörper (20) integrierte Laschen (22) auf dem Ventilkolben (40) axial bewegbar gehalten ist, wobei die in den ersten Ventilkörper (20) integrierten Laschen (22) mit zumindest einer Ausnehmung (44) auf dem Ventilkolben (40) in Eingriff stehen.

Druckspeichersystem für ein Fahrzeug, umfassend einen Druckspeicherbehälter und zumindest ein damit wirkverbundenes mehrstufiges Ventil.

## Beschreibung

### Gebiet der Erfindung

Die vorliegende Erfindung betrifft ein mehrstufiges Ventil für ein Druckspeichersystem sowie ein Druckspeichersystem für ein Fahrzeug.

### Stand der Technik

Derartige Vorrichtungen können beispielsweise in Form von Einzelventilen oder als Ventilkombinationen in Auslassöffnungen von Tanks oder Tanksystemen von Fahrzeugen eingesetzt werden, um kontrolliert Kraftstoff aus einem Druckspeichersystem zu entnehmen und den Kraftstoff einem Verbraucher (beispielsweise einem Verbrennungsmotor oder einer Brennstoffzelle) zuzuführen.

Ein Ventil entsprechend dem Oberbegriff von Anspruch 1 ist aus der US 2011/0068286 A1 bekannt. Das beschriebene Magnetventil umfasst ein Gehäuse, eine mit einem ersten Anschluss verbundene erste Kammer, eine mit einem zweiten Anschluss verbundene zweite Kammer und eine durch einen Ventilsitz gebildete Ventilöffnung, die die erste mit der zweiten Kammer verbindet. Ein Hauptventilkörper ist in dem Gehäuse bewegbar angeordnet und weist einen Dichtkörper auf, der so gegen den Ventilsitz drückbar ist, dass die Ventilöffnung verschlossen wird. Ein Pilotventilkörper ist mit dem Hauptventilkörper verbunden und relativ zu dem Hauptventilkörper verschiebbar angeordnet. Weiterhin ist eine elektromagnetische Betätigungsvorrichtung so angeordnet, dass sie den Pilotventilkörper mittels einer elektromagnetischen Kraft verschieben kann. Der Dichtkörper ist dabei so ausgebildet, dass ein Pilotkanal die erste Kammer und die zweite Kammer verbindet und der Pilotkanal durch die Bewegung des Pilotventilkörpers verschließbar ist. Der mit dem Hauptventilkörper verbundene Dichtkörper ist dabei vorzugsweise als Spritzgussteil in Insert-Technik ausgebildet.

Das in der US 2011/0068286 A1 offenbarte Ventil weist zwar gegenüber dem bis dahin bekannten Stand der Technik Vorteile auf, allerdings ist das vorgeschlagene Ventil aufwändig in Herstellung und Montage. So muss beispielsweise der Hauptventilkörper durch einen gesonderten Stift am Pilotventilkörper bewegbar gehalten werden. Außerdem ist ein für die Funktion des Ventils kritischer Ventilsitz direkt am Ventilgehäuse ausgebildet. Die erforderliche Präzision der Fertigung verteuert die Herstellung des Ventilgehäuses und schränkt die Materialauswahl ein.

Es ist Aufgabe der Erfindung, Ventile der genannten Art in dieser Hinsicht zu verbessern und insbesondere ein mehrstufiges Ventil anzugeben, das die Bauteilanzahl minimiert, die Montage vereinfacht und das Verhalten des mehrstufigen Ventils bezüglich Präzision der Funktion und Verschleiß der Komponenten verbessert.

Es ist außerdem Aufgabe der Erfindung verbesserte Druckspeichersysteme für Fahrzeuge, mit einfacherer Montage und erhöhter Betriebssicherheit, zu ermöglichen.

### Zusammenfassung der Erfindung

Die Lösung der Aufgabe erfolgt durch ein mehrstufiges Ventil für ein Druckspeichersystem, wobei das mehrstufige Ventil ein Ventilgehäuse, eine Ventilkammer mit einer Zulauföffnung und einer Auslassöffnung, einen entlang einer bevorzugten Achse bewegbaren Ventilkolben, sowie einen ersten Ventilkörper mit einem ersten axialen Kanal und einen zweiten Ventilkörper mit einem zweiten axialen Kanal umfasst, wobei der erste Ventilkörper und der zweite Ventilkörper an der bevorzugten Achse koaxial angeordnet sind. Es ist dadurch gekennzeichnet, dass der erste Ventilkörper den Ventilkolben zumindest teilweise umschließt und durch zumindest zwei in den ersten Ventilkörper integrierte Laschen auf dem Ventilkolben axial bewegbar gehalten ist, wobei die in den ersten Ventilkörper integrierten Laschen mit zumindest einer Ausnehmung auf dem Ventilkolben in Eingriff stehen und so den Hub des Ventilkolbens relativ zum ersten Ventilkörper begrenzen.

Als bevorzugte Achse wird in dieser Patentschrift eine Achse bezeichnet, die zu einer durch die Bauweise des Ventils bestimmten Bewegungsrichtung des Ventilkolbens parallel verläuft. Bei einem beispielsweise zylindrisch ausgeführten Ventilkolben der entlang seiner Achse bewegbar ist, ist die bevorzugte Achse die Achse des Ventilkolbens. Ausnehmungen auf dem Ventilkolben können beispielsweise als umlaufende Rillen oder als lokale Vertiefungen an einer Außenfläche des Ventilkolbens ausgebildet sein. Der erste Ventilkörper weist integrierte Laschen aus einem vorzugsweise elastischen Material auf, wobei die integrierten Laschen einerseits die präzise Zentrierung und axiale Führung des ersten Ventilkörpers auf dem Ventilkolben bewirken und andererseits eine einfache und reversible Montage des ersten Ventilkörpers auf dem Ventilkolben ermöglichen. Bei geeigneter Materialwahl (beispielsweise PEEK oder ein vergleichbarer Kunststoff) kann der erste Ventilkörper samt integrierten Laschen und Dichtelementen (beispielsweise ein erster Ventilsitz oder eine Dichtkuppe) für die Abdichtung gegenüber dem Ventilkolben und/oder dem zweiten Ventilkörper, als bauliche Einheit aus einem Werkstoff in einem Stück gefertigt werden.

Die Lösung der Aufgabe erfolgt außerdem durch Bereitstellung eines Druckspeichersystems für ein Fahrzeug, umfassend einen Druckspeicherbehälter und zumindest ein damit wirkverbundenes mehrstufiges Ventil. Besonders vorteilhaft wirkt sich aus, dass ein dem mehrstufigen Ventil vorgeschaltetes Druckspeichersystem über einen extrem weiten Druckbereich zuverlässig betrieben werden kann.

Weiterbildungen der Erfindung sind in den abhängigen Ansprüchen, der Beschreibung sowie den beigefügten Zeichnungen angegeben.

Vorzugsweise ist der erste Ventilkörper in einer Ausnehmung des zweiten Ventilkörpers entlang der bevorzugten Achse bewegbar geführt angeordnet. Durch die koaxiale Anordnung des ersten Ventilkörpers in einer insbesondere zylindrischen Ausnehmung des zweiten Ventilkörpers ist eine besonders präzise Führung der Bewegung des ersten Ventilkörpers gewährleistet.

Besonders bevorzugt ist eine Bauweise in der der zweite Ventilkörper als separate, vom Ventilgehäuse oder einem Ventilaufnahmeblock getrennte Einheit ausgeführt ist. Dadurch können sowohl der im zweiten Ventilkörper angeordnete zweite axiale Kanal als auch der dazugehörige zweite Ventilsitz mit hoher Präzision ausgeführt werden. Eine selbsttätige Zentrierung beim Zusammenbau von erstem und zweitem Ventilkörper an der bevorzugten Achse wird ermöglicht. Außerdem kann durch die freie Wahl eines geeigneten Materials für den zweiten Ventilkörper der Ventilsitz zwischen erstem und zweitem Ventilkörper bezüglich Dichtwirkung und Verschleiß optimiert werden.

Weiters bevorzugt ist der zweite Ventilkörper gegenüber dem Ventilgehäuse unbewegbar angeordnet. Um zu verhindern, dass beim Anheben des ersten Ventilkörpers der als separates Bauteil ausgeführte zweite Ventilkörper unkontrollierte Bewegungen ausführt, wird der zweite Ventilkörper in seiner Position fixiert. Das kann beispielsweise durch einen mechanischen Anschlag am Ventilgehäuse erfolgen, wobei der mechanische Anschlag am Ventilgehäuse den zweiten Ventilkörper gegen den Ventilaufnahmeblock presst.

Bevorzugt ist ein statisches Dichtelement auf der einem Ventilaufnahmeblock zugewandten Seite des zweiten Ventilkörpers so angeordnet, dass die wirksame Angriffsfläche für den im Bereich der Auslassöffnung auf den zweiten Ventilkörper wirkenden Druck kleiner ist, als die wirksame Angriffsfläche für den auf der dem ersten Ventilkörper zugewandten Seite des zweiten Ventilkörpers auf den zweiten Ventilkörper wirkenden Druck. Dieser auf der dem ersten Ventilkörper zugewandten Seite des zweiten Ventilkörpers herrschende Druck entspricht dem Druck in der Zulauföffnung und bewirkt die Fixierung des zweiten Ventilkörpers in seiner Position.

Besonders bevorzugt ist der zweite Ventilkörper ausschließlich durch ein statisches Dichtelement an dem Ventilgehäuse (oder einem Ventilaufnahmeblock) abgedichtet. Dadurch sind alle dynamisch beanspruchten Flächen (insbesondere der erste und zweite Ventilsitz) auf leicht austauschbaren, vom Rest des Ventilaufbaus trennbaren, Bauteilen angeordnet.

In einer weiteren bevorzugten Ventilausführung ist der Durchflusswiderstand des im ersten Ventilkörper angeordneten ersten Kanals grösser als der Durchflusswiderstand des im zweiten Ventilkörper angeordneten zweiten Kanals. Dadurch wird die Präzision der Ventilwirkung, insbesondere in einem Druckregelbetrieb, über einen großen Arbeitsbereich ausgedehnt und gleichmäßig verteilt.

In einer weiteren bevorzugten Ausführungsform weisen die in den ersten Ventilkörper integrierten Laschen an dem der Basis des ersten Ventilkörpers abgewandten Ende jeweils zumindest einen radial nach innen gerichteten Fortsatz auf. Dieser Fortsatz kann beispielsweise hakenförmig ausgebildet sein und bewirkt einerseits eine präzise Begrenzung der axialen Bewegung des Ventilkolbens im ersten Ventilkörper. Andererseits sind die Fortsätze bevorzugt so geformt, dass eine einfache Montage und Demontage des ersten Ventilkörpers auf dem Ventilkolben ermöglicht wird.

In einer besonders bevorzugten Ausführung ist das mehrstufige Ventil so ausgeführt, dass der Ventilkolben durch eine Magnetspule bewegbar ist. Die Magnetspule ist so eingerichtet, dass durch geeignete Ansteuerung die auf den Ventilkolben wirkende Kraft so dosiert wird, dass durch Bewegung des Ventilkolbens der erste axiale Kanal und der zweite axiale Kanal nacheinander geöffnet und/oder verschlossen werden.

Der erste Ventilkörper ist vorzugsweise aus einem elastisch verformbaren Material hergestellt. Durch eine den sehr hohen Drucken (200 bis ungefähr 1000 Bar) angepasste Materialwahl wird die Dichtwirkung optimiert und Verschleiß an Ventilsitzen vermieden. Besonders geeignete Materialien umfassen Kunststoffe wie PEEK oder PAS.

Das mehrstufige Ventil muss keinen separaten Ventilaufnahmeblock aufweisen. Möglich ist auch, dass der Ventilaufnahmeblock und das Ventilgehäuse eine bauliche Einheit bilden.

Das erfindungsgemäße mehrstufige Ventil ist für unterschiedliche Fluide wie Wasserstoff, Methan, Erdgas oder ein Gemisch aus Wasserstoff und Erdgas besonders geeignet. Durch entsprechende Anpassungen ist auch eine Verwendung mit Flüssig-Gas (LPG) und anderen flüssigen Medien möglich.

Günstig ist auch, wenn das Ventilgehäuse zumindest teilweise in einen Druckspeicherbehälter hineinragt und dauerhaft mit dem Druckspeicherbehälter verbunden ist. In dieser Ausführungsform ist das Ventil platzsparend angeordnet und vor mechanischer Krafteinwirkung geschützt.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht einer Ausführungsform des erfindungsgemäßen mehrstufigen Ventils.
- Fig. 2: ist eine schematische Schnittansicht einer weiteren Ausführungsform des erfindungsgemäßen mehrstufigen Ventils.
- Fig. 3: ist eine Schnittansicht eines mehrstufigen Ventils ausgeführt als Magnetventil.
- Fig. 4: ist eine Einzelteildarstellung eines ersten und zweiten Ventilkörpers in einer Ausführungsform.
- Fig. 5: ist eine Einzelteildarstellung eines koaxial angeordneten ersten und zweiten Ventilkörpers sowie eines Ventilkolbens in einer weiteren Ausführungsform.

### Detaillierte Beschreibung der Erfindung

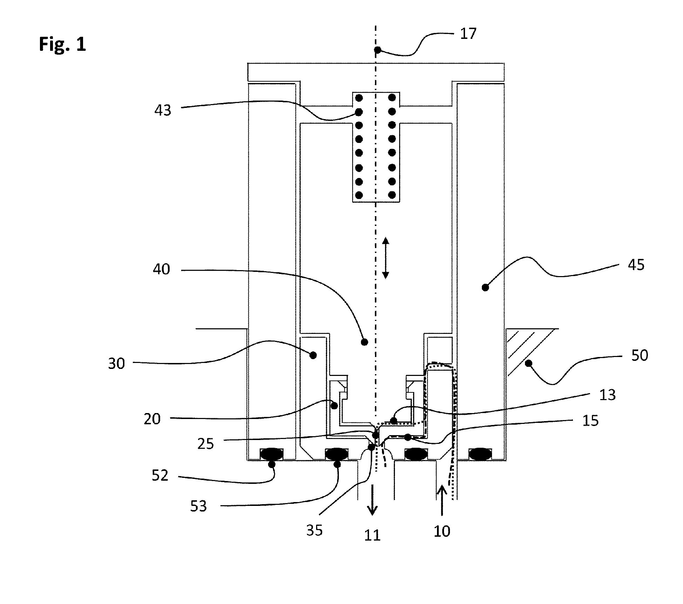

In der in Figur 1 gezeigten, beispielhaften Ausführungsform ist ein erfindungsgemäßes mehrstufiges Ventil in einem Ventilaufnahmeblock 50 angeordnet. Der Ventilaufnahmeblock 50 weist eine mit einem Druckspeicherbehälter verbundene Zulauföffnung 10 und eine Auslassöffnung 11 auf. Aus dem Druckspeicherbehälter kann Fluid durch die Zulauföffnung 10 in den Einlassbereich der Ventilkammer gelangen. Der Ventilkolben 40 wird durch die Kraft der Feder 43 gegen die Basis 21 des ersten Ventilkörpers 20 gedrückt und verschließt den ersten axialen Kanal 25. Durch die Kraft der Feder 43 wird über den Ventilkolben auch der erste Ventilkörper 20 gegen den zweiten Ventilkörper 30 gedrückt und verschließt den zweiten axialen Kanal 35. Der zweite Ventilkörper 30 wird in der gezeigten Ausführung durch erhöhten Druck in der Zulauföffnung 10, wobei sich der erhöhte Druck beispielsweise über Durchlassöffnungen 38,39 in der Gesamten Ventilkammer ausbreiten kann, gegen den Ventilaufnahmeblock 50 gedrückt. Dabei wird der Bereich der Auslassöffnung 11 gegen den Bereich der Zulauföffnung 10 durch das statische Dichtelement 53 hermetisch abgedichtet. Das Ventilgehäuse 45 ist in der gezeigten Ausführung über das erste Dichtelement 52 gegenüber dem Ventilaufnahmeblock 50 hermetisch abgedichtet. Auch eine Ausführungsform in welcher das Ventilgehäuse 45 und der Ventilaufnahmeblock 50 eine bauliche Einheit bilden ist denkbar.

Das zweistufige Ventil ist in der in Fig. 1 gezeigten Position geschlossen. Der Ventilkolben 40 ist entlang der bevorzugten Achse 17 bewegbar geführt angeordnet. Die zum Bewegen des Ventilkolbens beispielsweise erforderliche Magnetspule ist in der Figur 1 nicht gezeigt.

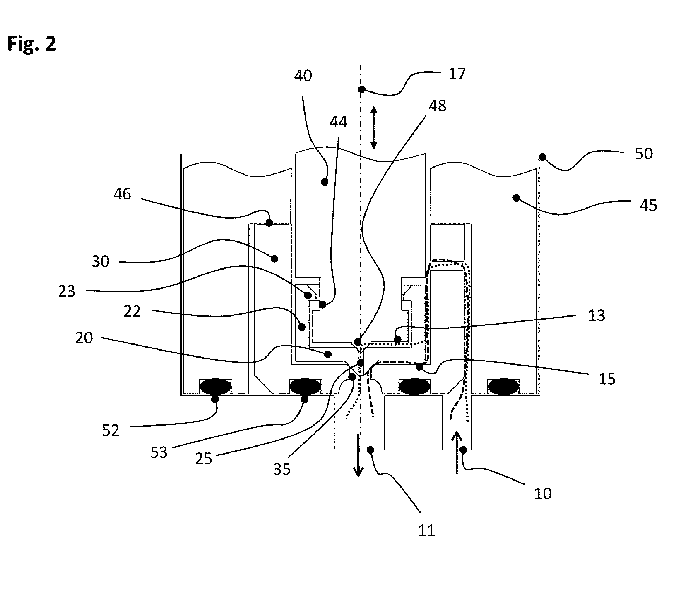

Figur 2 zeigt eine schematische Schnittansicht einer weiteren Ausführungsform des erfindungsgemäßen mehrstufigen Ventils exemplarisch im Detail. Im Unterschied zu der Ausführungsform in Fig. 1 wird der zweite Ventilkörper 30 über einen mechanischen Anschlag 46 durch das Ventilgehäuse 45 gegen den Ventilaufnahmeblock 50 gedrückt und mithilfe des statischen Dichtelementes 53 hermetisch abgedichtet. Das mehrstufige Ventil ist in der dargestellten Position geschlossen. Durch Anheben des Ventilkolbens 40 entlang der bevorzugten Achse 17 gibt die Kuppe 48 des Ventilkolbens den ersten Ventilsitz frei und Fluid kann über einen ersten Fluidweg 13 von der Zulauföffnung 10 über die Durchlassöffnungen 38,39 und zwischen den Laschen 22 hindurch, durch den ersten axialen Kanal 25 des ersten Ventilkörpers 20 zur Auslassöffnung 11 strömen. Der erste axiale Kanal ist wie beispielhaft in der Fig. 2 gezeigt eher lang und eng ausgeführt und weist so einen im Vergleich zum beispielhaft kürzer und weiter ausgeführt dargestellten zweiten Axialen Kanal 35 einen höheren Strömungswiderstand auf. Durch gesteuerte axiale Bewegung des Ventilkolbens 40 entlang der bevorzugten Achse 17 lässt sich der Fluidstrom entlang des ersten Fluidweges 13 insbesondere bei höheren Drucken präzise regeln.

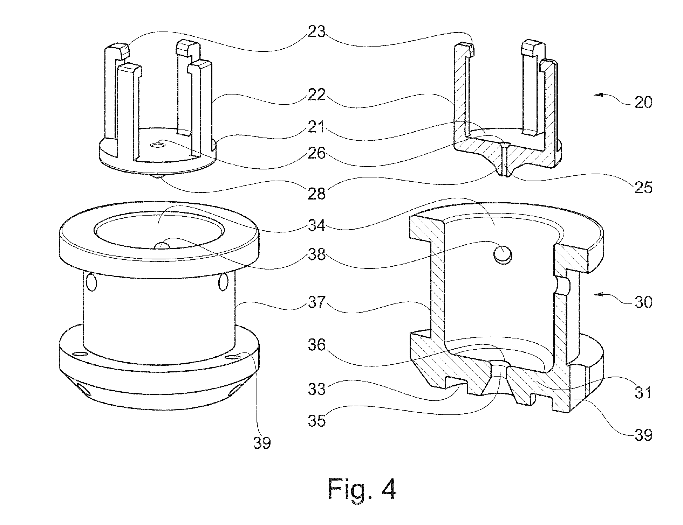

Sobald der Druck in der Zulauföffnung 10 unter einen vorbestimmten Druck gesunken ist wird der Ventilkolben 40 weiter entlang der bevorzugten Achse 17 angehoben. Durch Wirkung der, mit einer beispielsweise als umlaufende Rille auf dem Ventilkolben ausgebildeten Ausnehmung 44 in Eingriff befindlichen, radial nach innen gerichteten Fortsätze 23 wird nun der gesamte erste Ventilkörper entlang der bevorzugten Achse 17 angehoben. Dadurch wird auch der zweite Ventilsitz 36 (siehe Fig. 4) geöffnet und Fluid kann zusätzlich zum ersten Fluidweg 13 auch über den zweiten Fluidweg 15 durch den zweiten axialen Kanal 35 zur Auslassöffnung 11 strömen.

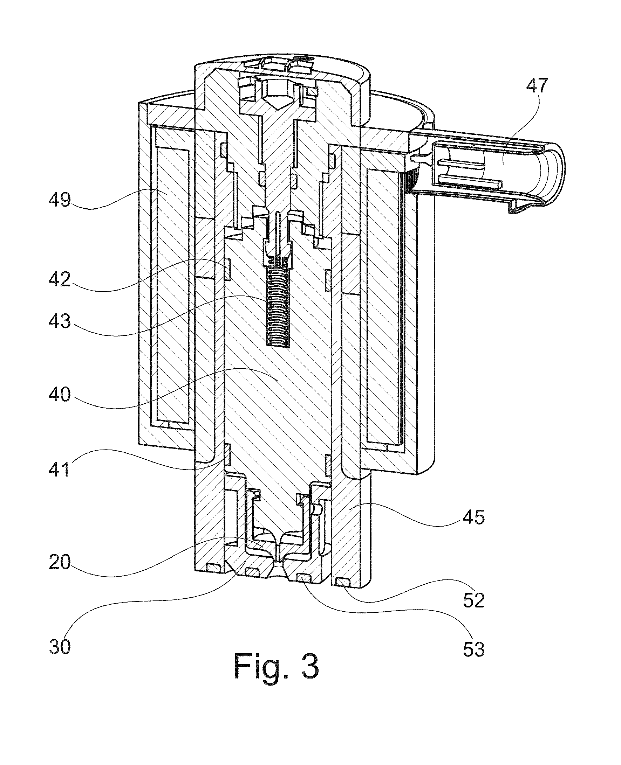

In Figur 3 ist eine Schnittansicht einer beispielhaften Ausführungsform eines mehrstufigen Ventils, ausgeführt als Magnetventil, dargestellt. Die Funktionsweise entspricht im Wesentlichen der in Fig. 1 gezeigten Ausführung. Zusätzlich zur Fig. 1 sind hier Dichtungen und Deckel des Ventilgehäuses 45, Gleitringe 41,42 und eine Magnetspule 49 sowie deren elektrischer Anschluss 47 gezeigt.

Figur 4 zeigt beispielhaft eine Einzelteildarstellung eines ersten und zweiten Ventilkörpers. In dieser Ausführungsform ist der erste Ventilkörper 20 einteilig ausgeführt und vier Laschen 22 weisen an ihrem Ende jeweils einen radial nach innen gerichteten haken- oder klauenförmigen Fortsatz auf. Die Basis 21 des ersten Ventilkörpers weist einen ersten axialen Kanal 25 mit einem in die Basis 21 eingesenkten kegeligen ersten Ventilsitz 26 und an der dem zweiten Ventilkörper 30 zugewandten Seite axial eine beispielhaft kegelförmig ausgeführte Dichtkuppe 28 auf.

Der zweite Ventilkörper 30 weist eine zylindrische Ausnehmung 34 auf, die als präzise Führung für die axiale Bewegung des ersten Ventilkörpers 20 ausgebildet ist. Der zweite Ventilkörper weist an seiner Außenseite eine Freistellung 37 auf. Durch Zusammenwirken mit den Durchlassöffnungen 38,39 kann Fluid so gleichmäßig verteilt werden und ungehindert in die Ausnehmung 34 einströmen. In der Basis 31 des Zweiten Ventilkörpers 30 ist der zweite axiale Kanal 35 mit dem beispielhaft eingesenkten kegelförmigen zweiten Ventilsitz 36 angeordnet. Dieser wird durch die Dichtkuppe 28 des axial bewegbar geführten ersten Ventilkörpers reversibel verschlossen und geöffnet.

An der der Auslassöffnung 11 im Ventilaufnahmeblock 50 zugewandten Seite weist die Basis 31 des zweiten Ventilkörpers 30 eine ringförmige Nut 33 zur Aufnahme des statischen Dichtelementes 53 auf.

Der erste Ventilkörper 20 umschließt von außen den Ventilkolben 40 wodurch der erste Ventilkörper 20 auf den Ventilkolben 40 "geklippt" werden kann. Um die erforderliche Nachgiebigkeit zu gewährleisten ist der erste Ventilkörper 20 geschlitzt oder durch Ausnehmungen geteilt ausgeführt. Alternativ dazu kann der erste Ventilkörper 20 auch mehrteilig ausgeführt sein, wobei die Basis 21 mit erstem Ventilsitz 26 ein Bauteil ist (vorzugsweise ein härteres gut dichtendes Material wie z.B. PEEK), und die Laschen mit den radialen Fortsätzen 23 weitere Bauteile sind (vorzugsweise flexibles Material wie Stahlblech). Die Laschen 22 können bei Bedarf in axiale Nuten auf dem Anker aufgeschoben werden. Nuten haben den Vorteil, dass der Dichtkörper nicht rotieren kann. Die Ausnehmung 34 des zweiten Ventilkörpers, in der sich der Dichtkörper bewegen kann, weist nur einen einheitlichen Querschnitt mit derselben Bearbeitungsfläche für einheitliche Form- und Oberflächentoleranzen auf. Auch die Vorsteuerbohrung des Dichtkörpers weist nur einen Querschnitt auf. Zum Öffnen und Schließen der beiden Fluidwege unterschiedlichen Querschnitts müssen ausschließlich der Ventilkolben (= Anker des Magnetventils) und der erste Ventilkörper 20 bewegt werden.

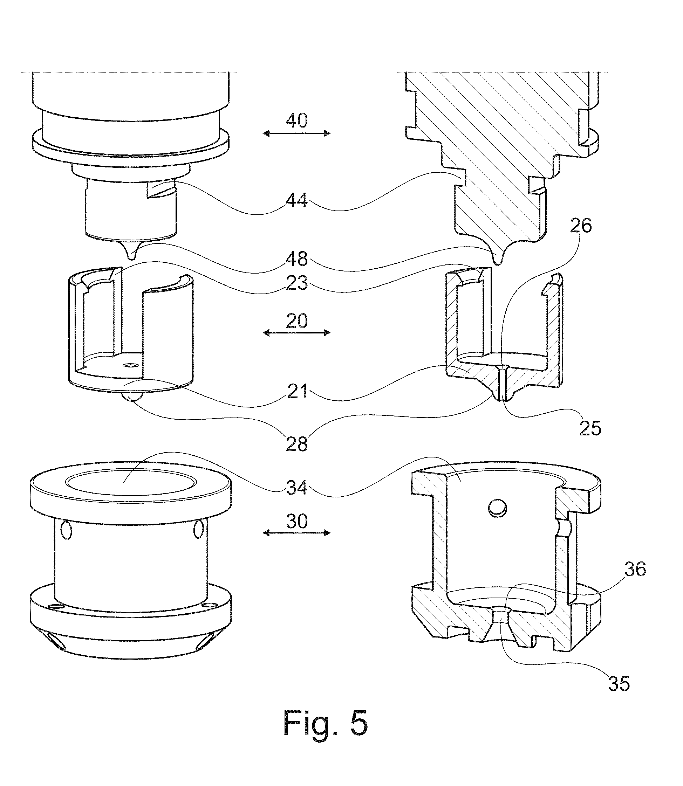

Figur 5·zeigt beispielhaft eine Einzelteildarstellung eines ersten und zweiten Ventilkörpers mit einem Ventilkolben 40. In dieser weiteren Ausführungsform ist der erste Ventilkörper 20 wieder einteilig ausgeführt und zwei breite Laschen 22 weisen an ihrem Ende jeweils einen radial nach innen gerichteten haken- oder klauenförmigen Fortsatz auf und sind durch eine relativ breite Ausnehmung voneinander getrennt. Die Basis 21 des ersten Ventilkörpers weist einen ersten axialen Kanal 25 mit einem in die Basis 21 eingesenkten kegeligen ersten Ventilsitz 26 und an der dem zweiten Ventilkörper 30 zugewandten Seite axial eine beispielhaft kegelförmig ausgeführte Dichtkuppe 28 auf.

Der zylindrische Ventilkolben 40 weist hier anstelle der umlaufenden Nut (vergleiche Fig. 3) zwei flache tangentiale Ausnehmungen 44 in Art eines Schlüsselansatzes auf. Die "Schlüsselweite" der tangentialen Ausnehmungen entspricht der Breite der Ausnehmung zwischen den beiden Laschen 22 des ersten Ventilkörpers So wird im Zusammenwirken eine unerwünschte Rotation des ersten Ventilkörpers auf dem zylindrischen Kolben 40 verhindert. Diese Bauvariante des erfindungsgemäßen Ventils ist besonders verschleißarm.

Die Erfindung ist sowohl für stationär betriebene Druckspeichersysteme als auch für Druckspeichersysteme in Fahrzeugen geeignet. Die Bezeichnung Fahrzeug umfasst in dieser Patentschrift beispielsweise Kraftfahrzeuge, Schienenfahrzeuge, sowie Wasser und Luftfahrzeuge. Alle angegebenen Druckwerte sind beispielhaft und führen zu keiner Einschränkung der Erfindung und des Druckbereiches für den die Erfindung beansprucht wird.

### Bezugszeichenliste

- 10: Zulauföffnung
- 11: Auslassöffnung
- 13: Erster Fluidweg
- 15: Zweiter Fluidweg
- 17: Bevorzugte Achse
- 20: Erster Ventilkörper
- 21: Basis (des ersten Ventilkörpers)
- 22: Lasche
- 23: Fortsatz
- 25: Erster axialer Kanal
- 26: Erster Ventilsitz
- 28: Dichtkuppe (des ersten Ventilkörpers)
- 30: Zweiter Ventilkörper
- 31: Basis (des zweiten Ventilkörpers)
- 33: Dichtungsrille
- 34: Ausnehmung
- 35: Zweiter axialer Kanal
- 36: Zweiter Ventilsitz
- 37: Freistellung
- 38,39: Durchlassöffnungen
- 40: Ventilkolben
- 41,42: Gleitringe
- 43: Druckfeder
- 44: Ausnehmung
- 45: Ventilgehäuse
- 46: Mechanischer Anschlag
- 47: Elektrischer Anschluss
- 48: Kuppe (des Ventilkolbens)
- 49: Magnetspule
- 50: Ventilaufnahmeblock
- 52: Erstes Dichtelement
- 53: Statisches Dichtelement

## Patentansprüche

1. Mehrstufiges Ventil für ein Druckspeichersystem, wobei das mehrstufige Ventil ein Ventilgehäuse (45), eine Ventilkammer mit einer Zulauföffnung (10) und einer Auslassöffnung (11), einen entlang einer bevorzugten Achse (17) bewegbaren Ventilkolben (40), sowie einen ersten Ventilkörper (20) mit einem ersten axialen Kanal (25) und einen zweiten Ventilkörper (30) mit einem zweiten axialen Kanal (35) umfasst, wobei der erste Ventilkörper (20) und der zweite Ventilkörper (30) an der bevorzugten Achse (17) koaxial angeordnet sind,
**dadurch gekennzeichnet, dass** der erste Ventilkörper (20) den Ventilkolben (40) zumindest teilweise umschließt und durch zumindest zwei in den ersten Ventilkörper (20) integrierte Laschen (22) auf dem Ventilkolben (40) axial bewegbar gehalten ist, wobei die in den ersten Ventilkörper (20) integrierten Laschen (22) mit zumindest einer Ausnehmung (44) auf dem Ventilkolben (40) in Eingriff stehen und den Hub des Ventilkolbens (40) relativ zum ersten Ventilkörper (20) begrenzen.

2. Mehrstufiges Ventil nach Anspruch 1,
**dadurch gekennzeichnet, dass** der erste Ventilkörper (20) in einer Ausnehmung (34) des zweiten Ventilkörpers (30) entlang der bevorzugten Achse (17) bewegbar geführt angeordnet ist.

3. Mehrstufiges Ventil nach Anspruch 1 oder 2,
**dadurch gekennzeichnet, dass** der zweite Ventilkörper (30) als separate, vom Ventilgehäuse (45) getrennte Einheit ausgeführt ist.

4. Mehrstufiges Ventil nach einem der vorhergehenden Ansprüche,
**dadurch gekennzeichnet, dass** der zweite Ventilkörper (30) gegenüber dem Ventilgehäuse (45) unbewegbar angeordnet ist.

5. Mehrstufiges Ventil nach einem der vorhergehenden Ansprüche,
**dadurch gekennzeichnet, dass** der zweite Ventilkörper (30) durch einen mechanischen Anschlag (46) im Ventilgehäuse (45) oder durch den in der Zulauföffnung (10) herrschenden Druck unbewegbar fixiert ist.

6. Mehrstufiges Ventil nach einem der vorhergehenden Ansprüche,
**dadurch gekennzeichnet, dass** der zweite Ventilkörper (30) ausschließlich durch ein statisches Dichtelement (53) an dem Ventilgehäuse (45) abgedichtet ist.

7. Mehrstufiges Ventil nach einem der vorhergehenden Ansprüche,
**dadurch gekennzeichnet, dass** der Durchflusswiderstand des im ersten Ventilkörper (20) angeordneten ersten Kanals (25) grösser ist als der Durchflusswiderstand des im zweiten Ventilkörper (30) angeordneten zweiten Kanals (35).

8. Mehrstufiges Ventil nach einem der vorhergehenden Ansprüche,
**dadurch gekennzeichnet, dass** die in den ersten Ventilkörper (20) integrierten Laschen (22) an dem der Basis (21) des ersten Ventilkörpers abgewandten Ende jeweils zumindest einen radial nach innen gerichteten Fortsatz (23) aufweisen.

9. Mehrstufiges Ventil nach einem der vorhergehenden Ansprüche,
**dadurch gekennzeichnet, dass** das mehrstufige Ventil zumindest eine Magnetspule (49) umfasst, wobei der Ventilkolben (40) durch die zumindest eine Magnetspule (49) bewegbar ist.

10. Druckspeichersystem für ein Fahrzeug, umfassend einen Druckspeicherbehälter und zumindest ein damit wirkverbundenes mehrstufiges Ventil nach einem der vorhergehenden Ansprüche.
